# EUROPÄISCHE PATENTANMELDUNG

(11) **EP 4 697 569 A1**
(43) Veröffentlichungstag der Anmeldung: **18.02.2026**
(21) Anmeldenummer: 24194007.1
(22) Anmeldetag: 12.08.2024
(51) Int. Cl.: H02K 7/14, H02K 21/12, H02K 1/2789, H02K 1/2791, H02K 21/22, H02K 21/14

(54) **VERBESSERTES ROTOR-DESIGN**

(71) Anmelder: Hilti Aktiengesellschaft, 9494 Schaan (LI)
(72) Erfinder: Steentjes, Simon, 86807 Buchloe (DE); Asmus, Torsten, 87600 Kaufbeuren (DE); Deisling, Markus, 86836 Untermeitingen (DE); Dotz, Boris, 86937 Scheuring (DE); Gerold, Johannes, 82418 Murnau (DE); Hurka, Florian, 86459 Margertshausen (DE); Ruff, Christian, 86391 Stadtbergen (DE); Rehorik, Kilian, 97082 Würzburg (DE)
(74) Vertreter: Hilti Aktiengesellschaft Corporate Intellectual Property

(57) **Zusammenfassung**

Elektromotor, insbesondere als Antrieb in einer Werkzeugmaschine, enthaltend einen Stator, einen Rotor, eine Motorwelle sowie eine Steuereinrichtung, wobei der Rotor drehfest mit einer Motorwelle verbunden ist.

Der Stator als Statorbuchse mit wenigstens einer ersten und zweiten Spulenwicklung ausgestaltet ist, und der Rotor als Rotorhülse ausgestaltet ist, wobei die Rotorhülse einen Aufnahmebereich zum Aufnehmen und Halten wenigstens eines ersten und zweiten Permanentmagneten sowie einen zentralen Steg zum Aufnehmen und Halten wenigstens eines dritten und vierten Permanentmagneten enthält, und wobei die Statorbuchse wenigstens teilweise innerhalb einer ringförmigen Aussparung der Rotorhülse positioniert ist, sodass die wenigstens erste und zweite Spulenwicklung sowie die Permanentmagnete zueinander ausgerichtet sind.

## Beschreibung

Die vorliegende Erfindung betrifft einen Elektromotor, insbesondere als Antrieb in einer Werkzeugmaschine, enthaltend einen Stator, einen Rotor, eine Motorwelle sowie eine Steuereinrichtung, wobei der Rotor drehfest mit einer Motorwelle verbunden ist.

Des Weiteren betrifft die vorliegende Erfindung eine Werkzeugmaschine mit einem Elektromotor.

Elektromotor als Antrieb von leistungsstarken Werkzeugmaschinen sollten eine möglichst hohe Drehmomentdichte aufweisen. Herkömmliche Elektromotoren, wie z.B. permanenterregte Gleichstrommaschine, weisen jedoch oftmals eine ungenügend hohe Drehmomentdichte auf.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 5.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Elektromotor, insbesondere als Antrieb in einer Werkzeugmaschine, enthaltend einen Stator, Rotor drehfest verbunden mit einer Motorwelle sowie eine Steuereinrichtung.

Erfindungsgemäß ist vorgesehen, dass der Stator als Statorbuchse mit wenigstens einer ersten und zweiten Spulenwicklung ausgestaltet ist, und der Rotor als Rotorhülse ausgestaltet ist, wobei die Rotorhülse einen Aufnahmebereich zum Aufnehmen und Halten wenigstens eines ersten und zweiten Permanentmagneten sowie einen zentralen Steg zum Aufnehmen und Halten wenigstens eines dritten und vierten Permanentmagneten enthält, und wobei die Statorbuchse wenigstens teilweise innerhalb einer ringförmigen Aussparung der Rotorhülse positioniert ist, sodass die wenigstens erste und zweite Spulenwicklung sowie die Permanentmagnete zueinander ausgerichtet sind.

Entsprechend einer vorteilhaften Ausführungsform kann es möglich sein, dass der wenigstens erste und zweite Permanentmagnet jeweils ein größeres Volumen aufweist als der wenigstens dritte oder vierte Permanentmagnet.

Gemäß einer weiteren vorteilhaften Ausführungsform kann es möglich sein, dass der wenigstens erste und zweite Permanentmagnet an einer ersten Mantelinnenfläche der Rotorhülse positioniert ist.

Entsprechend einer weiteren vorteilhaften Ausführungsform kann es möglich sein, dass der wenigstens dritte und vierte Permanentmagnet an einem zentralen Steg der Rotorhülse positioniert ist.

Die Aufgabe wird des Weiteren gelöst durch eine Werkzeugmaschine mit einem Elektromotor.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine gemäß einem ersten Ausführungsbeispiel;
- Figur 2: eine Seitenansicht auf eine Elektromotor gemäß einer ersten Ausführungsform; und

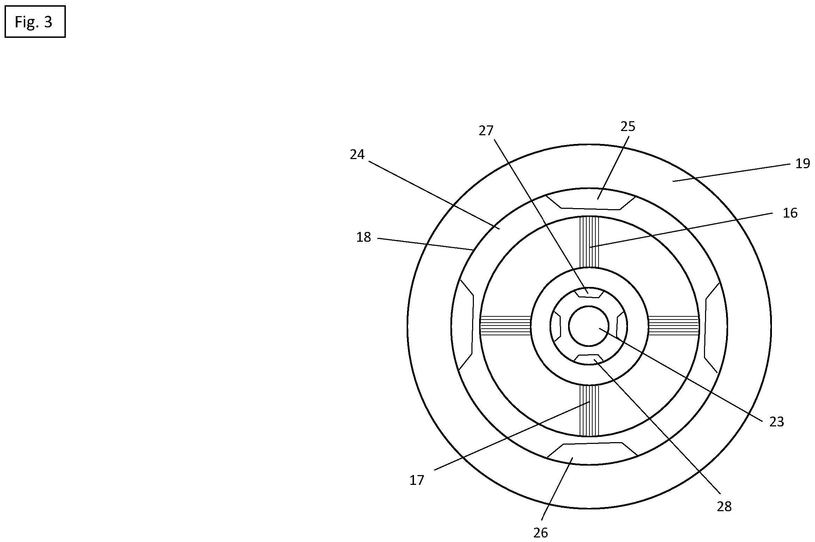

- Figur 3: eine Vorderansicht auf den Elektromotor.

### Ausführungsbeispiele:

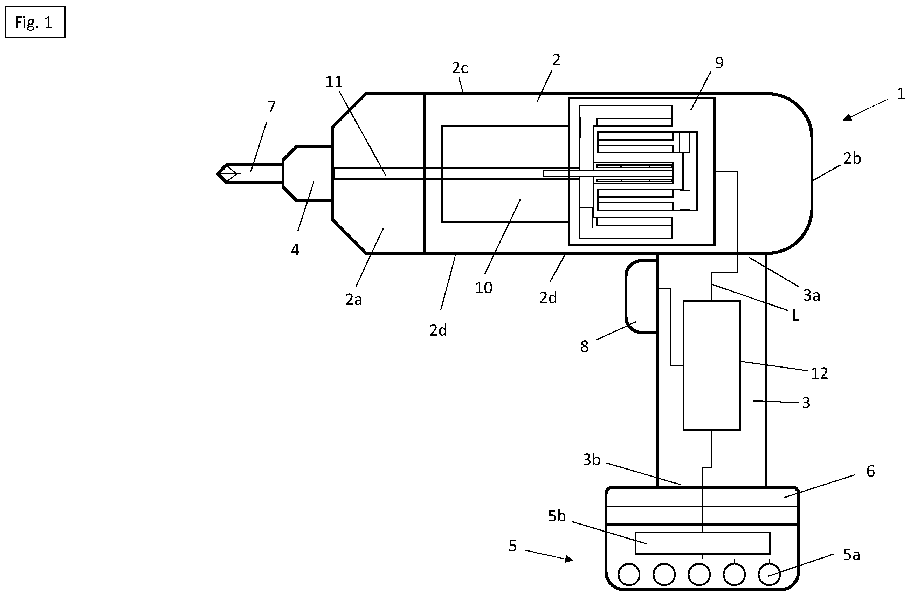

In Figur 1 ist eine Werkzeugmaschine 1 gemäß einem ersten Ausführungsbeispiel gezeigt.

Die in Figur 1 dargestellte Werkzeugmaschine 1 ist gemäß einer beispielhaften Ausführungsform in Form eines Akku-Schraubers ausgestaltet.

Gemäß einem alternativen Ausführungsbeispiel kann die Werkzeugmaschine 1 auch in Form einer Säge, eines Schleifgeräts, eines Bohrhammers oder dergleichen ausgestaltet sein.

Die als Akku-Schrauber ausgestaltete Werkzeugmaschine 1 enthält dabei im Wesentlichen ein Gehäuse 2, einen Handgriff 3 und eine Werkzeugaufnahme 4.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 4a. In dem beispielhaften Ausführungsbeispiel ist das Werkzeug 7 als Schrauberbit ausgestaltet.

An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 ebenfalls gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann die Energiespeichereinheit 5 wiederlösbar befestigt werden. Über die Schnittstelle 6 kann elektrische Energie von der Energiespeichereinheit 5 zu der Werkzeugmaschine 1 gelangen.

In dem vorliegenden Ausführungsbeispiel ist die Energiespeichereinheit 5 in Form eines einzelnen Akkumulators ausgestaltete. Alternativ kann auch mehr als ein Akkumulator als Energiespeichereinheit 5 der Werkzeugmaschine 1 vorgesehen sein.

Die Energiespeichereinheit 5 dient zum Versorgen der Werkzeugmaschine 1 mit elektrischer Energie. Die als Akkumulator ausgestaltete Energiespeichereinheit 5 enthält hierzu eine Anzahl an Energiespeicherelemente 5a (auch Akku-Zellen genannt) zum Aufnehmen, Speichern und erneuten Abgeben von elektrischer Energie. Zum Steuern und Regeln der Funktionen der Energiespeichereinheit 5 enthält die Energiespeichereinheit 5 eine Steuereinheit 5b.

Im Inneren des Gehäuses 2 ist im Wesentlichen ein Elektromotor 9 als Antrieb, eine Getriebevorrichtung 10 und eine Abtriebswelle 11 positioniert.

Eine Steuereinrichtung 12 befindet sich im Inneren des Handgriffs 3. Die Steuereinrichtung 12 dient im Wesentliche zum Steuern und Regeln der Funktionen der Werkzeugmaschine 1 und insbesondere des als Elektromotor ausgestalteten Antriebs 9.

Zu den Funktionen gehört unter anderen die Einstellung der Drehzahl des Elektromotors 9. Die Steuereinrichtung 12 enthält dabei auch die Kommutierungselektronik.

Der Elektromotor 9, die Getriebevorrichtung 10, die Abtriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Abtriebswelle 11 und schließlich auf die Werkzeugaufnahme 4 bzw. auf das Werkzeug 7 übertragen werden kann.

Der Elektromotor 9 ist in Form eines bürstenlosen Gleichstrommotors ausgestaltet und enthält im Wesentlichen einen Stator 13, einen Rotor 14 sowie eine mit dem Rotor 14 drehfest verbundene Motorwelle 15. Wie in Figur 1 gezeigt, ist die Motorwelle 15 drehfest mit der Getriebevorrichtung 10 verbunden.

Der Stator 13 ist als Statorbuchse mit einer ersten, zweiten, dritten und vierten Spulenwicklung 16, 17 ausgestaltet. Die Spulenwicklungen 16, 17 bestehen aus gewickeltem Kupferdraht und sind in dem vorliegenden Ausführungsbeispiel ringförmig ausgestaltet.

In dem vorliegenden Ausführungsbeispiel ist der Stator 13 mit einem dreisträngigen Drehfeldwicklung zum Erzeugen eines zweipoligen Drehfelds ausgestaltet.

Der Kupferdraht für die Spulenwicklungen 16, 17 ist dabei entsprechend in gleichmäßigen Abständen zueinander um die innere und äußere Mantelfläche 18 des zylindrischen Anteil 19 der Statorbuchse gewickelt.

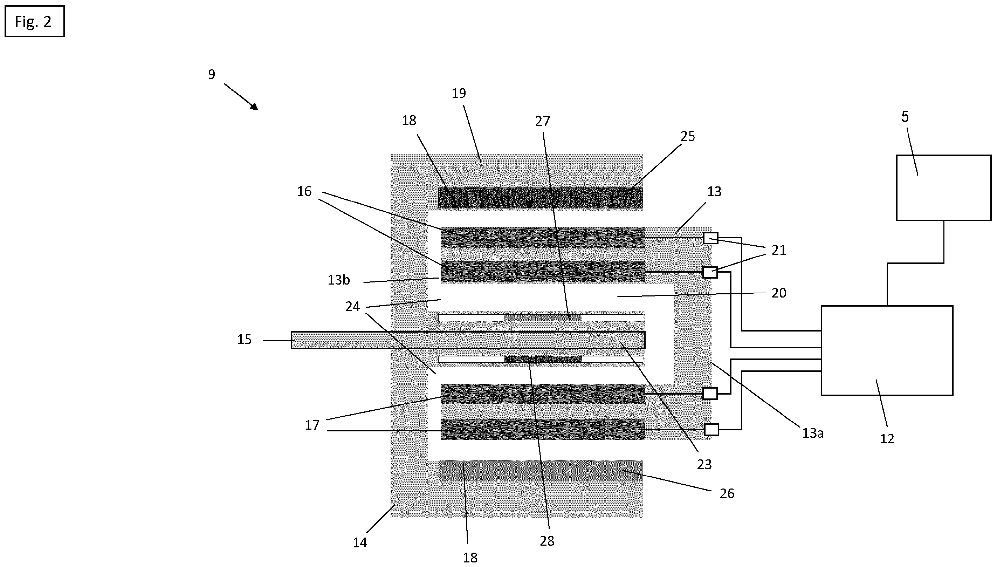

In Figur 2 ist jedoch lediglich eine erste und zweite Spulenwicklung 16, 17 dargestellt.

Des Weiteren ist die Statorbuchse als Zylinder mit einem zentralen Hohlraum 20 ausgestaltet. Der Hohlraum 20 ist als Sackloch ausgeformt. Der als Statorbuchse ausgestaltete Stator 13 enthält eine erstes Ende 13a und ein zweites Ende 13b.

An dem ersten Ende 13a des Stators 13 ist eine Vielzahl an Anschlusselementen 21 positioniert. In dem vorliegenden Ausführungsbeispiel sind die Anschlusselement 21 in Form von Steckverbindungen ausgestaltet. An den Anschlusselementen 21 sind Leitungen wiederlösbar anschlossen, die die Statorbuchse mit der Steuereinrichtung 12 verbinden.

Wie in Figur 2 angedeutet, ist die Steuereinrichtung 12 mit der Energiespeichereinheit 5, sodass elektrische Energie von der Energiespeichereinheit 5 über die Steuereinrichtung 12 zu den Spulenwicklungen 16, 17 der Statorbuchse gelangen kann. Wenn eine Spulenwicklung 16, 17 mit elektrischer Energie versorgt werden, wird in der Spulenwicklung 16, 17 entsprechend ein elektromagnetisches Drehfeld erzeugt.

Der Rotor 14 ist als becherförmige Rotorhülse ausgestaltet und enthält einen Aufnahmebereich 22 und einen zentralen Steg 23. Wie in Figur 2 angedeutet, ist eine ringförmige Aussparung 24 zwischen dem Aufnahmebereich 22 und dem zentralen Steg 23 vorgesehen. Die ringförmige Aussparung 24 ist dabei so ausgestaltet, den als Statorbuchse ausgestalteten Stator 13 aufzunehmen.

Der Aufnahmebereich 22 der Rotorhülse dient zum Aufnehmen und Halten eines ersten und zweiten Permanentmagneten 25, 26. Wie in den Figuren ersichtlich, sind die Permanentmagnete 25, 26 in gleichmäßigen Abständen zueinander an der Mantelinnenfläche 18 der Rotorhülse befestigt.

Alternativ können an der Mantelinnenfläche 18 der Rotorhülse auch mehr als zwei Permanentmagnete, insbesondere vier, sechs, acht, etc., vorgesehen sein.

Der zentrale Steg 23 der Rotorhülse dient zum Aufnehmen und Halten eines dritten und vierten Permanentmagneten 27, 28. Alternativ können an dem zentralen Steg 23 der Rotorhülse auch mehr als zwei Permanentmagnete, insbesondere vier, sechs, acht, etc., vorgesehen sein.

In Figur 2 ist der Elektromotor 9 in einem Zustand dargestellt, wobei der als Statorbuchse ausgestaltete Stator 13 in der ringförmigen Aussparung 24 der Rotorhülse angeordnet ist. Der Stators 13 ist hierzu mit dem zweiten Ende 13b in die Rotorhülse gesteckt.

Wenn sich die Statorbuchse in der Rotorhülse befindet, sind die Spulenwicklungen 16, 17 des Stators 13 und die Permanentmagnete 25, 26 zueinander ausgerichtet.

Gemäß der vorliegenden beispielhaften Ausführungsform weist der erste und zweite Permanentmagnet 25, 26 jeweils ein größeres Volumen auf als der dritte oder vierte Permanentmagnet 27, 28.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energiespeichereinheit
- 5a: Energiespeicherelement
- 5b: Steuereinheit
- 6: Schnittstelle der Werkzeugmaschine
- 7: Werkzeug
- 8: Aktivierungsschalter
- 9: Elektromotor
- 10: Getriebevorrichtung
- 11: Abtriebswelle
- 12: Steuereinrichtung
- 13: Stator
- 13a: erstes Ende des Stators
- 13b: zweites Ende des Stators
- 14: Rotor
- 15: Motorwelle
- 16, 17: Spulenwicklung
- 18: Mantelinnenfläche
- 19: zylindrischer Anteil
- 20: Hohlraum
- 21: Anschlusselement
- 22: Aufnahmebereich
- 23: zentraler Steg
- 24: ringförmige Aussparung
- 25, 26, 27, 28: Permanentmagnet

## Patentansprüche

1. Elektromotor (9), insbesondere als Antrieb in einer Werkzeugmaschine (1), enthaltend einen Stator (13), einen Rotor (14), eine Motorwelle (15) sowie eine Steuereinrichtung (112), wobei der Rotor (14) drehfest mit einer Motorwelle (15) verbunden ist,
**dadurch gekennzeichnet, dass** der Stator (13) als Statorbuchse mit wenigstens einer ersten und zweiten Spulenwicklung (16, 17) ausgestaltet ist, und der Rotor (14) als Rotorhülse ausgestaltet ist, wobei die Rotorhülse einen Aufnahmebereich zum Aufnehmen und Halten wenigstens eines ersten und zweiten Permanentmagneten (25, 26) sowie einen zentralen Steg (23) zum Aufnehmen und Halten wenigstens eines dritten und vierten Permanentmagneten (27, 28) enthält, und wobei die Statorbuchse wenigstens teilweise innerhalb einer ringförmigen Aussparung (24) der Rotorhülse positioniert ist, sodass die wenigstens erste und zweite Spulenwicklung (16, 17) sowie die Permanentmagnete (25, 26, 27, 28) zueinander ausgerichtet sind.

2. Elektromotor (9) nach Anspruch 1,
**dadurch gekennzeichnet, dass** der wenigstens erste und zweite Permanentmagnet (25, 26) jeweils ein größeres Volumen aufweist als der wenigstens dritte oder vierte Permanentmagnet (27, 28).

3. Elektromotor (9) nach Anspruch 1 oder 2,
**dadurch gekennzeichnet, dass** der wenigstens erste und zweite Permanentmagnet (25, 26) an einer Mantelinnenfläche (18) der Rotorhülse positioniert ist.

4. Elektromotor (9) nach wenigsten einem der Ansprüche 1 bis 3,
**dadurch gekennzeichnet, dass** der der wenigstens dritte und vierte Permanentmagnet (25, 26) an einem zentralen Steg (23) der Rotorhülse positioniert ist.

5. Werkzeugmaschine (1) mit einem Elektromotor (9) nach wenigstens einem der Ansprüche 1 bis 4.
